# EUROPEAN PATENT APPLICATION

(11) **EP 4 653 200 A1**
(43) Date of publication of application: **26.11.2025**
(21) Application number: 24178107.9
(22) Date of filing: 24.05.2024
(51) Int. Cl.: B41J 11/00, G06F 3/12, G06Q 10/08, G06Q 10/06, B65B 25/14, H04N 1/00

(54) **AUTOMATIC CONTROL SYSTEM FOR A PRINTER SYSTEM**

(71) Applicant: Ricoh Company, Ltd., Tokyo 143-8555 (JP)
(72) Inventor: RUSSEL, Stewart, London, NW1 3BF (GB); PATEL, Dilip, Telford, TF2 9NS (GB)
(74) Representative: Marks & Clerk LLP

(57) **Abstract**

The present invention relates to an automated printer system for loading a printed set of printed material items into a container. The printer system is operative to determine which printer device, from one or more available printer devices, to output a print job to, for controlling the printer devices based on identifier marks provided on containers.

## Description

### [Technical field]

The present invention relates to an automated printer system for printing printed material items. The printer system may be operative to load a printed set of printed material items into a container.

### [Background]

A company which sends its customers information in the form of printed materials, may want to send customised information to a specific customer. For example, if a customer has obtained a specific product from the company (e.g. a product which has been customized according to user selections), the company might want to send information about other related products to that customer, or to explain how to use the specific product. For that reason, the company may arrange to print specific printed materials for a given customer.

Printer devices can print customised material for each respective customer by using different print job data for each customer. In such a scenario, it is known to use a packaging conveyor as seen in US2011288678, which discloses inserting documents in an automated manner into containers (e.g. boxes) which are transported by means of a conveyor in an order-picking system. In such scenarios, the company aims to accurately distribute printed materials into containers such as boxes, envelopes, or other types located on the conveyor. Occasionally, these printed materials are distributed as a set of printed material items.

The printed material items are output by printer devices (also called print engines) and dispensed into a container, but as the printed material items are placed directly into the container, if the printer and/or the conveyor malfunctions, it is necessary to stop the conveyor. Stopping the conveyor results in stopping the entire production line and can cause a backlog of print jobs waiting to be printed, as well as a monetary loss to the company from the halted output of print jobs.

### [Summary of invention]

The invention is set out in the appended set of claims.

A first aspect of the invention proposes, in general terms, that when a set of printed material items is to be loaded into the container, "identifier marks" provided respectively on at least one of the printed material items and on the container are read. Based on these it is decided whether to perform the loading operation (e.g. if the respective identifier marks match according to a database record). If the loading operation is not performed, one or both of the set of printed material items and the containers are transferred along a rejection path, e.g. leading to a space (e.g. a receptacle) where the set of printed material items can be stored, for example for subsequent use or for disposal.

A specific expression of this concept is a printing system comprising one or more printer devices to print printed material items, a first conveyor to convey to a dispensing position a container for holding printed material items, and a second conveyor to convey one or more printed material items that constitute a set of printed material items, from the one or more printer devices to a head position. A loading device is configured to load the set of printed material items at the head position into the container when the container is at the dispensing position. A printed material item scanner reads a printed material identifier mark on a printed material item of the set of printed material items, when the set of printed material items is located at the head position, and generates a first output based on the printed material identifier mark. A container scanner reads a container identifier mark on the container when the container is at the dispensing position, and generates a second output based on the container identifier mark. One or more memory storage units store instructions which, when processed by one or more processors, cause the one or more processors, based on the first and second outputs, selectively to:
(i) control the loading device to load the set of printed material items at the head position into the container at the dispensing position;
(ii) control the loading device to convey the set of printed material items at the head position along a printed material items rejection path; or
(iii) control the first conveyor to convey the container at the dispensing position along a container rejection path.

Because of the above system, the number of errors that occur which result in the first conveyor stopping can be reduced.

Optionally, the printing system further comprises a second container scanner to read a container identifier mark on the container to produce a recognition result, when the container is at a reading position, the first conveyor being arranged to convey the container from the reading position to the dispensing position. In this option, the one or more memory storage units further store instructions which, when processed by the one or more processors, cause the one or more processors to: determine a print job based on the recognition result, the print job comprising producing the one or more printed material items that constitute the set of printed material items; and instruct one of the one or more printer devices to print the determined print job. By including the second container scanner at the reading position, the printer device is instructed to print a print job as a result of a corresponding container being scanned. Therefore, the likelihood of print jobs being sent to printer devices in the same order as the containers on the first conveyor is increased. There is also less risk of a print job being erroneously sent to a printer device, and so the number of errors which result in the first conveyor stopping can be reduced.

The concept of triggering printer devices to print jobs based on recognising container identifier marks provides an independent second aspect of the invention.

A specific expression of the second aspect of the invention is a printing system comprising: one or more printer devices to print printed material items; a first conveyor to convey to a dispensing position a container for holding printed material items; and a first container scanner to read a container identifier mark on the container to produce a recognition result. One or more memory storage units store instructions which, when processed by one or more processors, cause the one or more processors to determine a print job based on the recognition result, the print job comprising producing one or more printed material items that constitute a set of printed material items; and instruct one of the one or more printer devices to print the determined print job. In this printing system the instructing of the printer device to print a print job occurs as a result of a corresponding container being scanned. Therefore, the likelihood of print jobs being sent to printer devices in the same order as the containers on the first conveyor is increased. There is also less risk of a print job being erroneously sent to a printer device, and so the number of errors which result in the first conveyor stopping can be reduced.

The memory storage units in either of the printing systems described above may store further instructions which, when processed by the one or more processors, cause the one or more processors to obtain status information from each of the one or more printer devices; and control the one or more printer devices based on the status information. Controlling the one or more printer devices based on the status information may comprise: based on the status information, determining a list of available printer devices; selecting a printer device from the list of available printer devices; and controlling the selected printer device to produce the set of printed material items. By controlling the one or more printer devices based on the status information, if an error occurs in a printer device or it needs more toner or ink, or another consumable, the printing system can control a different printer device (if another is available) to produce the needed set of printed material items. This effectively means that printer devices which would incorrectly produce a set of printed material items are not instructed to print until instructed to do so, for example, after the error has been fixed, or after the toner or ink is replenished. As a result, there will be fewer erroneously printed print material items and so the number of errors which result in the first conveyor stopping can be reduced.

The concept of choosing a printer device to print jobs based on selecting a printer from a list of available printers provides an independent third aspect of the invention.

A specific expression of the third aspect of the invention is a printing system comprising one or more printer devices to print printed material items; a first conveyor to convey to a dispensing position a container for holding printed material items; a second conveyor to convey one or more printed material items that constitute a set of printed material items, from the one or more printer devices to a head position; and a loading device configured to load the set of printed material items at the head position into the container when the container is at the dispensing position. One or more memory storage units store instructions which, when processed by one or more processors, cause the one or more processors to obtain status information from each of the one or more printer devices; based on the status information, determine a list of available printer devices; select a printer device from the list of available printer devices; and control the selected printer device to produce the set of printed material items. By controlling the one or more printer devices based on the status information, if an error occurs in a printer device or it needs more toner or ink, the printing system can control a different printer device (if any other is available) to produce the needed set of printed material items. If no other printer device is available, the printing operation may be aborted or suspended. This effectively means that printer devices which would incorrectly produce a set of printed material items are not instructed to print until instructed to do so, for example, after the error has been fixed, or after the toner or ink is replenished. As a result, there will be fewer erroneously printed print material items and so the number of errors which result in the first conveyor stopping can be reduced.

Optionally, the printing system further comprises at least one of a monitor to display the status information of the one or more printer devices to a user; and a user interface using which a user can select at least one of the one or more printer devices, thereby preventing the one or more processors from controlling the selected at least one printer device to produce sets of printed material items. The monitor and the user interface enable a user to see live status information on the printing system and in the case of the user interface, the user can even control the printing system based on the displayed status information. As a result, the number of errors which result in the first conveyor stopping can be reduced.

At least one of the above printer devices may further comprise a corresponding completion scanner to read printed material identifier marks on printed material items produced by the corresponding printer device to produce a completion result indicating whether a set of printed material items produced by the corresponding printer device is complete. The one or more memory storage units may store further instructions which, when processed by the one or more processors, cause the one or more processors selectively to either transfer the printed material items to a printed items discard path; or control the second conveyor to convey the printed material items to the head position.

The printed material items discard path and the printed material items rejection path may be the same path, or may at least lead to a shared destination, such as a printed material items receptacle. The completion scanner provides an additional check of whether or not a set of printed material items has been produced correctly. As a result, sets of printed material items with errors can be removed from the second conveyor and this reduces the likelihood of misprinted sets of printed material items being placed in containers. Additionally, the printed material items in the printed items discard path or the shared printed material items receptacle can be retrieved for inspection, or for use, perhaps to reduce the number of printed material items that need to be produced for a print job. For example, if the set of printed material items contained a single misprinted item, the rest could be used so that only the single misprinted item is reprinted. As a result, the amount of waste from errors in printing by the printer devices can be reduced.

At least one of the printer devices may further comprise a dispenser configured to transfer printed material items produced by the printer device to the second conveyor and, in the case of a set of printed material items which comprises a plurality of printed material items, group the set of printed material items, upon the corresponding completion scanner generating a completion result indicating that the set of printed material items is complete. The dispenser may be further configured to store multiple sets of printed material items. Additionally, the dispenser may be further configured to select one of the multiple sets of printed material items, and transfer the selected set of printed material items to the second conveyer.

Optionally the dispenser may maintain a log of the completion result for each of the multiple sets of printed material items, and the selection of one of the multiple sets of printed material items may be based on the log. Advantageously, because the dispenser is able to store multiple sets of printed material items, and select individual sets of printed material items to transfer to the second conveyer, it can change the sequence of sets of printed material items to reflect any changes to the sequence of the corresponding containers and so the number of errors which result in the first conveyor stopping can be reduced.

The one or more memory storage units may store further instructions which, when processed by the one or more processors, cause the one or more processors to detect the status of the first conveyor and pause printing if an error is detected. The one or more memory storage units may also store further instructions which, when processed by the one or more processors, cause the one or more processors to detect the status of the second conveyor and pause printing if an error is detected. Either case prevents printed material items from being over produced until the error is resolved so that when the error of the first conveyor or the second conveyor is resolved normal printing procedure can resume with minimal impact. If printing is not paused when an error is detected on the first or second conveyor, there is a risk of sets of printed material items ending up in the wrong container or overlapping with other sets of printed material items.

The printing system may also comprise at least one of a monitor to display to a user the detected status of the conveyor; and/or a user interface using which a user can stop the conveyor of which the status was detected. The monitor and the user interface enable a user to see live status information on the first and second conveyors and in the case of the user interface, the user can even control one or both of the conveyors based on the displayed status information. As a result, the user can stop a conveyor as soon as an error is noticed to prevent it getting worse, or even preventatively stop one or both of the conveyors.

### [Brief description of the drawings]

Figure 1 illustrates an example of an automated control system (ACS) layout according to an embodiment of the present invention;
Figure 2 illustrates a computing device suitable for implementing the embodiment;
Figures 3a and 3b illustrate a flow chart according to the embodiment;
Figure 4(a) is a flow chart according to the embodiment, and figure 4(b) defines some software variables used in figure 4(a);
Figure 5 illustrates working list management according to the embodiment;
Figure 6 illustrates working list management according to the embodiment;
Figure 7 illustrates working list management according to the embodiment.

### [Detailed description]

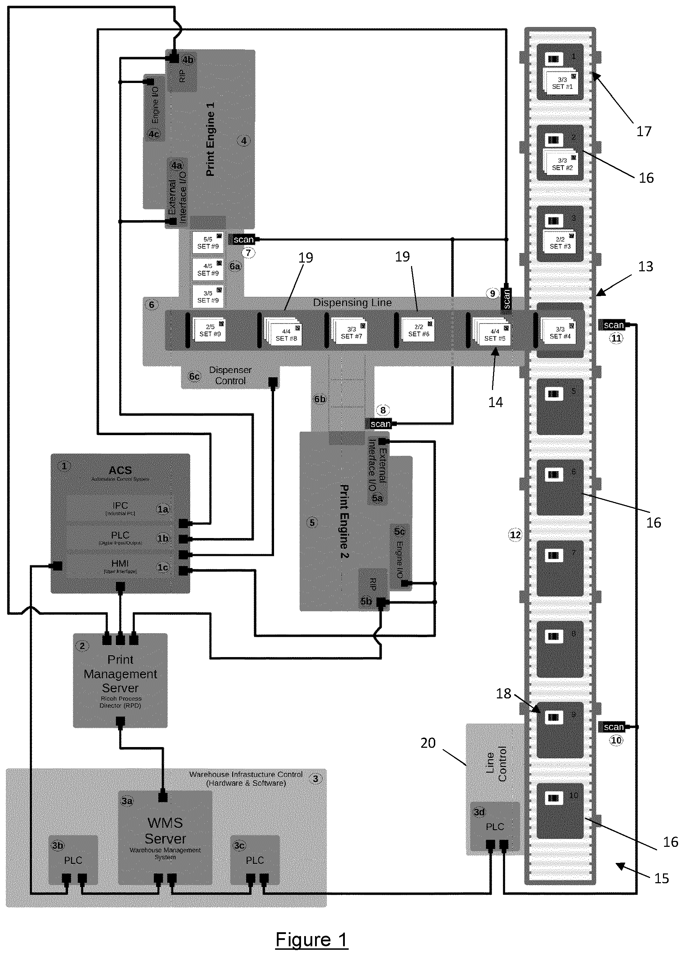

A printing system which is an embodiment of the present invention will now be described with reference to figure 1. The printing system comprises an automated control system (ACS) 1 which includes at least an industrial PC (IPC) 1a, a programmable logic controller (PLC) 1b and a human-machine interface (HMI) 1c. Software within these systems allows the total management of all aspects of the print-on-demand (POD) infrastructure as described below.

In addition to the ACS 1, the printing system further comprises one or more print engines 4, 5, referred to as printer devices, a print management system 2 (for example, RICOH ProcessDirector^{™} (RPD)), a first conveyor 12, a dispensing line 6 also referred to as a second conveyor, a printed material item scanner 9, a container scanner 11 (e.g. a barcode scanner) and a loading device (not shown, but explained below) all of which can integrate with a customer's hardware and software infrastructure 3, also referred to as a warehouse infrastructure control. In the example of figure 1, the warehouse infrastructure control 3 comprises a warehouse management system (WMS) server 3a, a PLC 3b, and a second PLC 3c. As seen in figure 1, the ACS 1 is in communication with all of the above components. While this communication is depicted by electronic cables, it could also be wirelessly e.g. via near field communication (NFC), or through an intermediary. Although only two printer devices 4, 5 are shown, there may be any number of printer devices, and the printed material items they produce are collected by the second conveyor 6.

Each printer device 4, 5 is any device capable of outputting an image and/or text on a medium, the result of which is referred to as a printed material item. The printer device 4, 5 can use toner or ink to output the image and/or text on the medium. In normal operation, the printer device 4, 5 will receive a print job and instructions to output the print job. The print job is digital information which represents a printed material item. After receiving the print job and the instruction to print said print job, the print job undergoes raster image processing. The raster image processing can either be performed by a raster image processor (RIP) 4b, 5b integrated with the printer device 4, 5 as shown in figure 1 or by an external RIP that sends an output bitmap to the printer device 4, 5. Each printer device 4, 5 has an external interface I/O 4a, 5a which enables communication with the ACS 1 and the RIP 4b, 5b. The external interface I/O 4a, 5a is a means by which the ACS 1 monitors the status of the printer device 4, 5 as mentioned above, and also receives the bitmap from the RIP 4b, 5b. Any external interface I/O which allows for such communication can be used, for example the external interface I/O of European patent EP2908250B1. Once raster image processing is complete, the raster image is sent to the printer device 4, 5. The printer device 4, 5 applies the toner or ink to the medium such that the output image and/or text matches the one or more printed material items represented by the print job. A single print job can represent multiple printed material items and these printed material items are considered as a single set of printed material items. There is no requirement for the printer device 4, 5 to receive a print job and instructions to output the set of printed material items 19 represented by the print job simultaneously. Indeed, the print job can be stored separately to the printer device 4, 5 and accessed when an instruction is received to print the specified print job that is stored. In this way, print jobs can be stored in a central storage system, for example, the print management server 2 accessible by multiple printer devices 4, 5 such that any printer device 4, 5 with access to the print management server 2 can be instructed to print a print job that is stored on the print management server 2. The printer device 4, 5 may have additional capabilities in addition to producing printed material items, for example, a scanning or copying functionality. The type and number of printer devices 4, 5 chosen for the system are selected based on speed, throughput and volume capability and can vary based on the requirements for the individual installation.

The ACS 1 continuously monitors the one or more printer devices 4, 5, collecting data about their status, availability and readiness to print. This includes the consumable levels (toners, media, etc.), errors & alerts, print counters, waste collection and other system critical information. When multiple printer devices are utilised, this information is used to manage printer device availability and load balancing. Information can be collected using standard protocols, such as SNMP.

The printer devices 4, 5 are tuned to reduce or eradicate any mechanisms that cause them to pause printing, reduce throughput or delay printing, so they are capable of printing with minimal start-up time and for prolonged periods without interruption. The ACS 1 is responsible for performing any required periodic calibrations and adjustments, such as colour registration during any downtime or load balancing period, so as to maintain a high quality of print.

The aim of the printing system is to be ready at all times to be able to accept a "Print-On-Demand" (PoD) job also referred to as a print job and to produce it within the time required by demands of the environment in which the printing system is located.

A print job is normally input at the warehouse WMS server 3a but can also be input at one of the printer devices 4, 5 or at the IPC 1a of the ACS 1 for example. Print jobs can be queued in a printing queue so that if there are no available printer devices 4, 5 at the time of receiving the print job, it will be assigned to a printer device once the print jobs received before it are produced. A print job can also be stored until instructed to join the printing queue upon receipt of an instruction to print the print job.

The first conveyor 12 is a conveyance means for conveying containers 16 from a loading position 15 (where containers 16 are placed on the first conveyor 12) to an end destination 17 (where containers 16 containing printed material items are removed from the first conveyor 12), via a dispensing position 13 where printed materials are inserted into containers 16 by the loading device. The first conveyor 12 could be a single conveyor belt or it could have merge, diverge, or sorting capabilities. The containers 16 conveyed on the container conveyor 12 can be any receptacle in which printed material items can be placed, for example, a box, or in some cases an envelope. Generally, below it will be assumed that the container 16 is a box.

A container 16 placed at the loading position 15 of the first conveyor 12 may first be conveyed to a reading position 18 where a scanner 10 (below referred to as a "second container scanner") reads a container identifier provided on the container 16. As discussed below, this triggers the performance of a corresponding print job which results in a corresponding set of printed material items 19 being printed.

Subsequently, the container 16 will be conveyed to the dispensing position 13 where the corresponding set of printed material items can be dispensed into the container 16 by the loading device. After the dispensing position 13, the container 16 is conveyed to the end destination 17 where the container 16 can be removed from the first conveyor 12. Although in figure 1 only a single end destination 17 is shown, there may alternatively be multiple end destinations 17. For example, the end destination 17 may be a separate conveyor belt for a particular customer.

Additionally, the first conveyor 12 has a (first) rejection path (not shown) to remove a container 16 from the first conveyor 12, e.g. a container at the dispensing position 13, to remove it from the printing system. The rejection path diverges, e.g. at the dispensing position, from the path along which containers are moved by the first conveyor 12. The control system to transfer a container 16 to the rejection path can be provided as a line control unit ("line control") 20, although the line control 20 is not illustrated in figure 1 as being at the dispensing position 13. As shown in figure 1, the ACS 1 communicates with a PLC 3d of the line control 20 via the warehouse infrastructure control 3. Once a container has been placed on the rejection path it may be returned to the loading position 15, to begin the printing and dispensing process again, or an operator can investigate why the process has failed.

The second conveyor 6 is a conveyance means for conveying sets of printed material items 19. As with the first conveyor 12, the second conveyor 6 can be a single conveyor belt or it could have merge, diverge, or sorting capabilities. When the one or more printer devices 4, 5 output sets of printed material items, they are placed on the second conveyor, for example by a dispenser as described later, and conveyed towards a head position 14.

The second conveyor 6 provides a (second) rejection path (not shown) at the head position 14 to remove the set of printed material at the head position from the main conveyance path of the second conveyor 6, for removal from the printer system (e.g. for destruction). The process by which is it determined to remove a set of printed material from the head position 14 to the rejection path is described below.

The printed material item scanner 9 is located at or near the head position 14 of the second conveyor 6 that conveys sets of printed material items. The printed material item scanner 9 reads a print material identifier mark on one of the printed material items in a set of printed material items that is located at the head position. The print material identifier mark can be any mark that is associated with a print job corresponding to the set of printed material items 19, for example a barcode (a one-dimensional barcode or a two-dimensional barcode), a character or series of characters, or the like. The printed material item scanner 9 (as well as the scanners 7 and 8 discussed below) are configured to be capable of reading these identifier marks (e.g. as barcode readers). The printed material item scanner 9 reads the print material identifier mark from the set of printed material items 19 at the head position 14 and transmits the output to the ACS 1.

The container scanner 11 is located at or near the dispensing position 13 of the first conveyor 12 that conveys containers 16. The container scanner 11 reads a container identifier mark on a container 16 that is located at the dispensing position 13. The container identifier mark can be any mark that is associated with a print job corresponding to the container 16, for example a barcode (a one-dimensional barcode or a two-dimensional barcode), a character or series of characters, or the like. The container scanners 10, 11 are configured to be capable of reading these identifier marks (e.g. as barcode readers). The container scanner 11 reads the container identifier mark from the container 16 at the dispensing position 13 and transmits the output to the ACS 1. The purpose of the container identifier mark and the print material identifier mark is so that a set of printed material items associated with a specific customer is dispensed into a container 16 intended for that specific customer. In other words, the identifier marks facilitate sorting the correct sets of printed material items into the correct containers 16.

The loading device is a device configured to load a set of printed material items from the head position 14 of the second conveyor 6 into the container 16 located at the dispensing position 13 of the first conveyor 12.

The loading device may be provided with a container buffer (not shown). To explain, although the printing operation of an individual print-on-demand (PoD) print job typically only takes 2-3 seconds to complete, due to the size and complexity of production printer device 4, 5, in reality it takes approximately 20 seconds to process and convey this job through the printer device 4, 5. The PoD job is handled by the automated dispensing function of the printer device 4, 5 which can take an additional 10-20 seconds, depending on the complexity of the configuration. This means that the overall cycle time of a print job, from being requested to being dispensed, may typically be between 30-40 seconds. This does not take into account the time needed to start and stop a production printer device, which will incur an additional delay.

Customers' requirements for dispensing items into containers 16 vary widely. Typically, considering the case that the containers 16 are boxes, the boxes move at a constant speed along the first conveyor 12, with a predictable periodicity. The time to handle each individual box is known as its 'takt' time. If a first conveyor 12 has a throughput of 900 boxes an hour, each box will have a takt time of 4 seconds, meaning a box will appear at any specific point on the first conveyor every 4 seconds. Since the print jobs take 30-40 seconds, the loading device at the dispensing position 13 may be provided with a container buffer, e.g. box buffer. A box buffer is a small segment of a conveyor line where boxes have the ability to stop and wait for a period of time whilst the print job is prepared. This allows the PoD system and the first conveyor 12 to work in an asynchronous manner.

The number of boxes within the box buffer is usually optimised based on the customer's requirement for PoD. For example, if the cycle time of a PoD job is 32 seconds, and the takt time of a box is 4 seconds, the capacity of the box buffer may typically be a minimum of 8 boxes (8 boxes each with a takt time of 4 seconds = 32 seconds), e.g. for storing boxes to receive the printed material items printed by 8 printer devices 4, 5. Boxes within the box buffer can stop, queue up and wait for their individual PoD jobs, independent of box movement prior and beyond the box buffer. With an efficient box buffer, boxes will enter, get their jobs dispensed and move on every 4 seconds, although they are delayed at the box buffer by the cycle time of the PoD system, which is 32 seconds in the example above.

As the box buffer has known capacity, the loading device is configured to manage the same number of PoD jobs. So in the above example, the loading device may be capable of buffering at least 8 jobs.

The box buffer also allows the PoD system to manage situations where the first conveyor 12 downstream of the dispensing position 13 stops due to unpredictable events. Any PoD jobs requested prior to these line stops can be completed and buffered within the loading device, and will be fulfilled once the first conveyor 12 restarts.

The box buffer also allows for management of boxes if an error occurs within the PoD system. For example, if there is jam within the loading device, the printing system will stop and wait for attention from an operator. Boxes currently held within the box buffer will wait for the error to be cleared before production resumes. Depending on the seriousness of the error which has occurred, the box buffer can be temporarily suspended and no new jobs accepted, but generally, this is not desired so as to keep the maximum throughput of the conveyor line.

For simplicity, the possibility of providing a container buffer is not considered further here, but if one is provided some of the explanation below can be generalised, e.g. since it makes it possible for there to be multiple containers waiting at the dispensing position 13 to receive an appropriate set of printed materials.

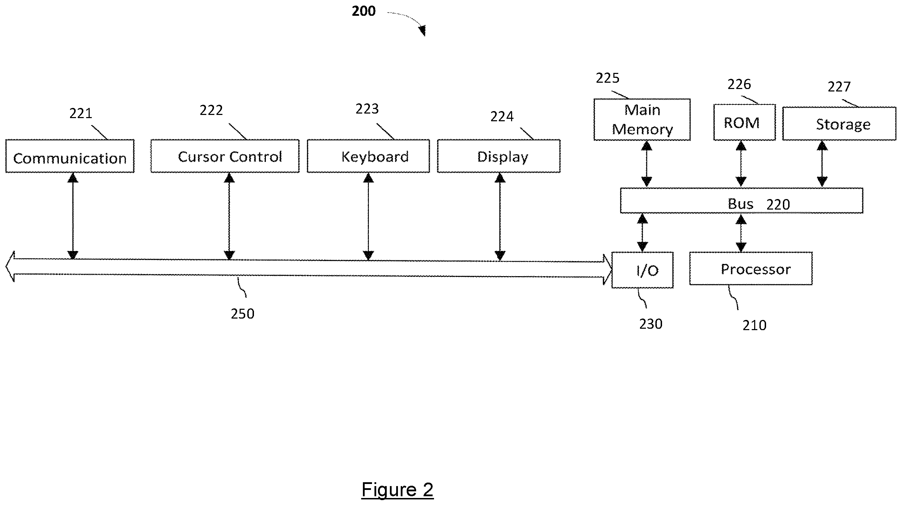

The ACS 1, the print management server 2 and/or the warehouse infrastructure control 3 can be implemented as a computer system 200 shown in figure 2. There may be a separate computer system 200 for each of the ACS 1, the print management server 2 and the warehouse infrastructure control 3, or one or more of the ACS 1, the print management server 2 and the warehouse infrastructure control 3 may be implemented on the same computer system 200. The computer system 200 includes a system bus 220 for communicating information, and a processor 210 coupled to bus 220 for processing information.

The computer system 200 further comprises a random-access memory (RAM) or other dynamic storage device 225 (referred to herein as main memory), coupled to bus 220 for storing information and instructions to be executed by processor 210. Main memory 225 also may be used for storing temporary variables or other intermediate information during execution of instructions by processor 210. The computer system 200 also may include a read only memory (ROM) and or other static storage device 226 coupled to bus 220 for storing static information and instructions used by processor 210.

A data storage device 227 such as a magnetic disk or optical disc and its corresponding drive may also be coupled to the computer system 200 for storing information and instructions. The computer system 200 can also be coupled to a second I/O bus 250 via an I/O interface 230. A plurality of I/O devices may be coupled to I/O bus 250, including a display device 224, an input device (e.g., a keyboard (or alphanumeric input device) 223 and or a cursor control device 222). The communication device 221 is for accessing other computers (servers or clients). The communication device 221 may comprise a modem, a network interface card, or other well-known interface device, such as those used for coupling to Ethernet, token ring, or other types of networks.

In embodiments, the computer system 200 may be implemented as any of, or a combination of, one or more microchips or integrated circuits interconnected using a parent board, hardwired logic, software stored by a memory device and executed by a microprocessor, firmware, an application specific integrated circuit (ASIC), and/or a field programmable gate array (FPGA). The term "logic" may include, by way of example, software or hardware and/or combinations of software and hardware.

Embodiments may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Moreover, embodiments may be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection).

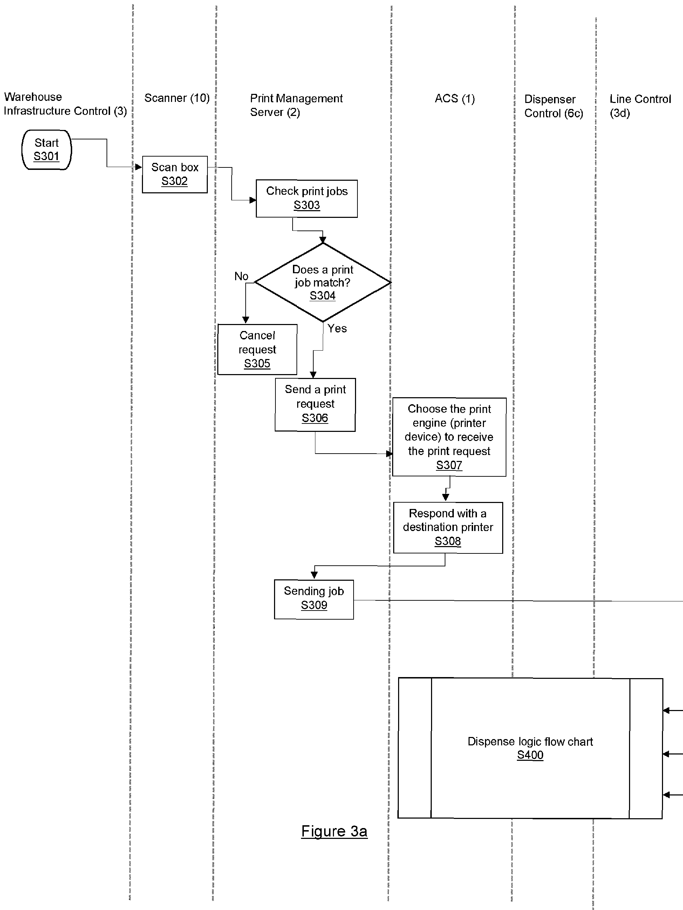

The operation of the printing system of figure 1 will now be described with reference to figures 3a, 3b and 4 to 7.

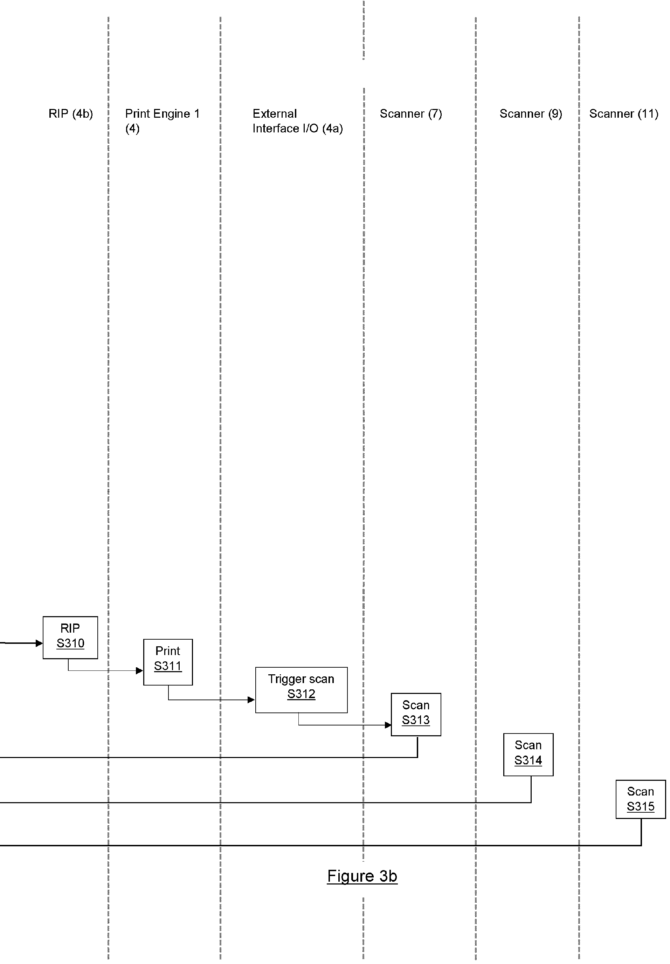

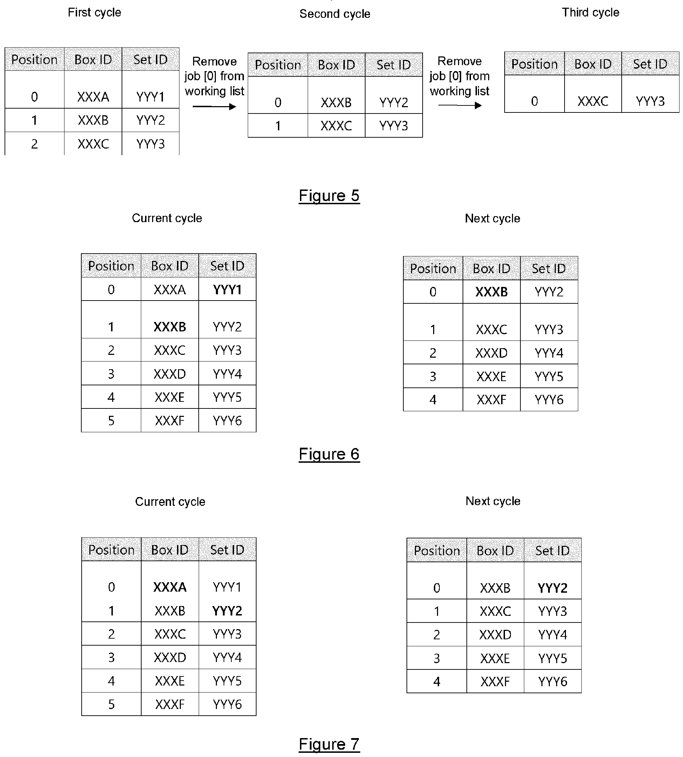

Figures 3a and 3b illustrate a flow diagram starting at S301, when a print job is submitted at the warehouse infrastructure control 3. When the print job is submitted, it is stored in the print management server 2. Additionally, a corresponding container 16 is prepared to receive the output set of printed material items that are associated with the print job. The container 16 can either be automatically prepared, for example, by an automated box erector, or manually prepared. The submitted print job is then associated with the prepared container 16 by marking the container 16 with a container identifier mark associated with the submitted print job. An entry associated with the identifiable container 16 is then added to a working list at the lowest open (i.e. empty) position and is referred to as a box ID. The working list is a digital list stored by the ACS 1. The working list has two columns, one to represent each of the identifiable containers once a print job is submitted, and the other to represent each of the sets of printed material items output by the printer devices 4, 5 that are represented by the submitted print jobs. The column of the working list that represents identifiable containers has entries at list positions 0 through n, where n is the integer number of containers that are identifiable and represents their order on the first conveyor 12 between the reading position 18 and the dispensing position 13. Position 0 means that the container should reach the dispensing position 13 next. The column of the working list that represents sets of printed material items output by the printer devices 4, 5 has entries at list positions 0 through m, where m is the integer number of sets of printed material items that are being conveyed by the second conveyor 6 to the head position 14 and represents their sequence on the second conveyor 6. Position 0 means that the set of printed material items should reach the head position 14 next. For example, when the printer system has just started operation, and the conveyors 6, 12 have just begun transporting sets of printed material items and containers respectively, the box and set at position 0 in the working list have not reached the head position 14 and dispensing position 13. Examples of working lists can be seen in figures 5 to 7 and will be further discussed below.

At S302, the container 16 is scanned by a second container scanner 10 at a reading position 18. As illustrated in Fig. 1, the reading position 18 is at or proximate the loading position 15 at which the container 16 is placed on the first conveyor 12. In a variation, the second container scanner 10 may be arranged to scan a container 16 prior to the container 16 being placed on the first conveyor 12. The first conveyor 12 is configured to convey the container 16 from the reading position 18 to the dispensing position 13. The second container scanner 10 reads the container identifier mark on the container 16 at the reading position 18 and outputs a recognition result which is then transmitted to the print management server 2. In addition to the recognition result, a request to print a print job associated with the container identifier mark is also transmitted to the print management server 2. The print management server 2 receives the recognition result at S303 and checks (S304) the stored print jobs to confirm if there is a print job associated with the container identifier mark. If there is no print job stored that is associated with scanned container identifier mark, then at S305 the request to print the print job associated with the container identifier mark is cancelled. If there is a print job that is associated with the container identifier mark, then at S306 the print request is forwarded to the ACS 1 along with the corresponding print job. The second container scanner 10 advantageously provides an initial sequence of containers that are placed on the first conveyor 12 to the print management server 2, which is then in the same order as the print jobs that are sent to be printed. As a result, the likelihood of the output sets of printed material items being in an order different to the containers is reduced and so the number of times the first conveyor 12 will have to stop is also reduced. While the second container scanner 10 is advantageous, it is not necessary to the operation of the printing system of figure 1. When a print job is submitted from the warehouse infrastructure control 3, it could automatically be submitted with a printing request to the print management server 2 which would then forward the print job and the printing request to the ACS 1 and operation would continue without the steps of S302 to S305.

At S307, the ACS 1 determines which printer device 4, 5 to transmit the print request and print job to. As stated above, the ACS 1 continuously monitors the one or more printer devices 4, 5, collecting data about their status, availability and readiness to print. This includes the consumable levels (toners, media, etc.), errors and alerts, print counters, waste collection and other system critical information. When multiple printer devices 4, 5 are utilised, this information is used to manage printer device 4, 5 availability and load balancing. Therefore, the ACS 1 chooses the printer device 4, 5 to send the print request and print job to, based on the status of the printer device 4, 5, while ensuring that the order of the sets of printed material items does not differ from the order of the corresponding boxes. The selection of where to send print requests, and thus print jobs, may be performed to accomplish load balancing, which balances the quantities printed by the printer devices 4, 5 according to pre-determined desired ratios for those quantities (e.g. if the printer devices are equivalent, so as to make the quantities printed by the printer devices 4, 5 substantially equal). For example, if one of the printer devices 4, 5 has a number of print jobs already in its printing queue which above a certain threshold while the other printer device 4, 5 does not, the ACS 1 might send the print request and print job to the printer device 4, 5 with the shorter printing queue. This may be performed to allow a printer which has carried out a large amount of printing to rest. As another example, if one printer device 4, 5 is running low on ink, toner, media to print on, or another consumable, the ACS 1 might send the print request and the print job to a different printer device 4, 5 with the goal of creating a period of non-printing time for the printer device 4, 5 running low on that consumable so that the consumable can be replenished. In a further example, if the ACS 1 detects an error in one of the printer devices 4, 5, then it might send the print request and print job to a different printer device 4, 5, again with the aim of creating a period non-printing for the printer device 4, 5 with the error so that it can be serviced.

Once the ACS 1 has determined which printer device 4, 5 to send the print request and print job to (in this case, printer device 4), at S308 it transmits the determined printer device 4 to the print management server 2. To prevent an error in which print job is meant to be sent to the determined printer device 4, the ACS 1 may also send the print job back to the print management server 2 along with the determined printer device 4. At S309, the print management server receives the determined printer device 4 and transmits the print job to the RIP 4b of the determined printer device 4.

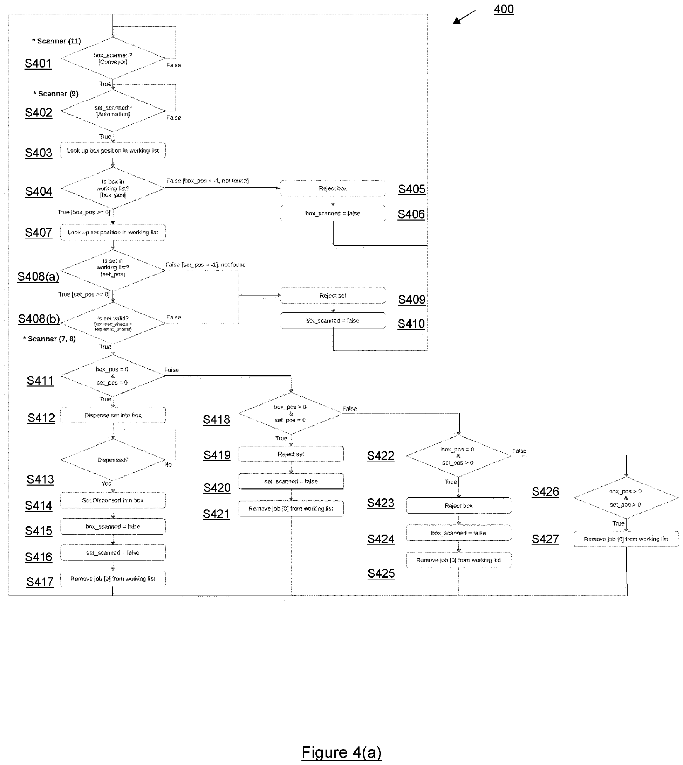

At S310, the RIP 4b of the determined printer device 4 receives the print job and performs raster image processing to output a bitmap of the received print job. The bitmap is then sent to the determined printer device 4 via the external interface I/O 4a of the determined printer 4. At S311, the determined printer device 4 receives the transmitted bitmap and outputs the one or more printed material items that form the set of printed material items represented by the print job. Once the determined printer 4 has finished outputting the set of printed material items represented by the print job, an entry associated with the output set of printed material items is added to the working list at the lowest open position and is referred to as a set ID. The printer devices 4, 5 may also include a corresponding completion scanner 7, 8. The completion scanner 7, 8 is a scanner that reads the printed material identifier mark on the printed material items and determines a completion result indicating whether or not a set of printed material items produced by the corresponding printer device 4, 5 is complete. For example, if a set of printed material items is expected to have 3 printed material items, the completion scanner checks if all 3 printed material items are output by scanning the printed material identifier on each of the printed material items. If all of the printed material identifiers are scanned, then the set is complete. If one or more of the printed material identifiers are not scanned, then the set is incomplete. A printed material identifier may not be scanned for a variety of reasons, for example, the identifier is not readable, suggesting a poor print quality of that printed material item, or because the printed material item was omitted from the print job. The completion scanner 7, 8 reduces the number of errors by identifying incorrectly printed sets of printed material items, which serves to decrease the number of times that the first conveyor 12 has to stop. At step S312, the external interface I/O 4a of the determined printer 4 sends a scan request to the completion scanner 7 of the determined printer 4 to cause it to scan the printed material item identifier mark on the output printed material items. The completion result of the completion scanner 7 is then used in the dispense logic flow chart 400 as described below with reference to figure 4(a). While steps S310 to S313 were performed by the printer device 4 and the corresponding RIP 4b, external interface I/O 4a and completion scanner 7, if the ACS 1 determined to send the print job to the printer device 5, then steps S310 to S313 would instead be performed by the printer device 5 and the corresponding RIP 5b, external interface I/O 5a, and completion scanner 8. Similarly, the same steps would occur if a third printer device not depicted by figure 1 was selected by the ACS 1.

At S314, the printed material item scanner 9 reads a printed material identifier mark on the set of printed material items that has reached the head position of the second conveyor 6 and transmits the result to be processed by the ACS 1 according to the dispenser logic flow chart at S400 as described below. As a printed material identifier mark on any one (or more, e.g. all) of the printed material items is associated with the same set of printed material items, it is not important which printed material identifier mark is read by the printed material item scanner 9.

Similarly, at S315, the container scanner reads the container identifier mark on the container that has reached the dispensing position of the first conveyor 12 and transmits the result to be processed by the ACS 1 according to the dispenser logic flow chart at S400 as described below.

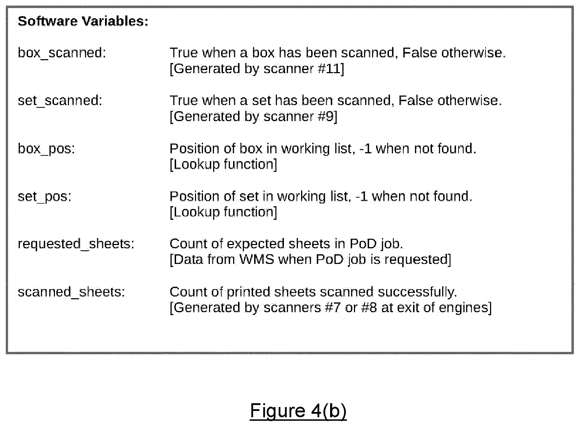

Figure 4(a) illustrates the dispenser logic flow chart at 400. This employs some software variables defined in figure 4(b). At step S401, it is determined if a recognition result produced by the the container scanner 11 has been received. This is indicated by a software variable box_scanned being "true". If so, the ACS 1 continues to S402. Otherwise, the ACS 1 waits for a container to arrive at the dispensing position 13 and get scanned by the container scanner 11.

At S402, it is determined if a recognition result produced by the printed material item scanner 9 has been received. This is indicated by a software variable set_scanned being "true". If so, the ACS 1 continues to S403. Otherwise, the ACS 1 waits for a set of printed material items to arrive at the head position 14 and get scanned by the printed material item scanner 9.

At S403, the ACS 1 checks the position in the working list of the box ID corresponding to the container that has been scanned at the dispensing position. A value box_pos is set accordingly to indicate this position. It is set to box_pos=-1 if no container is found in the working list, and otherwise the box_pos is set as a value greater than or equal to zero, to indicate the container position in the working list. Here, a box_pos value of zero indicates the box at the top of the working list.

At S404, the ACS 1 determines if there is a box ID associated with the container that has been scanned at the dispensing position (i.e. whether box_pos=-1). If the ACS 1 does not find a box ID associated with the scanned container in the working list (i.e. box_pos=-1), for example, because it has already been removed from the working list or was never entered, then it proceeds to S405.

At S405, the container is rejected. As mentioned above, the first conveyor 12 has a rejection path (not shown) to remove the rejected container. The line control 20 conveys the rejected container on the rejection path upon receiving a rejection notification from the ACS 1. In one possibility, the rejection path may be implemented at least partially manually, e.g. the rejected container can be manually removed from the dispensing position upon an operator receiving a rejection notification from the ACS 1.

Once the rejected container is removed from the dispensing position, at S406 there is no longer a container at the dispensing position 13, so the variable box_scanned is set to "false". The ACS 1 goes back to S401 to wait for the next container to arrive at the dispensing position 13 of the first conveyor 12.

If there is an entry in the working list associated with the container scanned at the dispensing position, then the ACS 1 proceeds to S407 and looks up the position of the set at the head position 14 (as detected by the scanner 9) in the working list, and sets this value as the value set_pos. If the detected set is not in the working list then set_pos is set to -1. Otherwise, set_pos indicates the position in the working list, with set_pos=0 meaning the first entry in the list.

If there is an entry in the working list associated with the set of printed material items scanned at the head position, then the ACS 1 proceeds to S408(a). At step S408(a), the ACS 1 checks that the set is in the working list. If the set is not found in the working list (i.e. if set_pos is -1), then the method passes to step S409, explained below. At S408(b), the ACS 1 checks if the scanned set of printed material items at the head position is valid i.e. complete. This check is performed using the completion result transmitted from the completion scanners 7, 8 at S313 in figure 3b. If the set is not found in step S408(a), or the completion result in step S408(b) indicates that the set of printed material items is not complete, then the ACS 1 proceeds to S409. At S409, the set is rejected and removed from the head position of the second conveyor 6. If the dispenser control 6c is present, the ACS 1 might transmit the rejection notification to the dispenser control 6c to divert the rejected set of printed material items along the rejection path. In one possibility, the rejection path may be implemented at least partially manually, e.g. the rejected set of printed material items can be removed manually after an operator receives a notification that the set is rejected from the ACS 1.

As explained so far, both instances of rejection and removal from the second conveyor 6 take place when the set of printed material items 19 is at the head position 14 of the second conveyor 6. However, it is possible for the set of printed material items to be rejected before reaching the head position of the second conveyor 6. Bridging the printer device 4, 5 and the second conveyor 6 is a dispenser 6a, 6b corresponding to each of the printer devices 4, 5, which transfers printed material items produced by the printer device 4, 5 to the second conveyor 6. When a set of printed material items 19 comprises a plurality of printed material items, the dispenser 6a, 6b also groups the printed material items into the set either before or after transferring them to the second conveyor 6. The completion scanner 7, 8 scans the printed material items as they are output from the printer device 4, 5. Therefore, it is possible to know if a set of printed material items produced by the printer device 4, 5 is complete while it is still on the dispenser 6a, 6b. If a set of printed material items is determined to be incomplete while still on the dispenser 6a, 6b, the dispenser 6a, 6b may dispense the incomplete set of printed material items to a location different to the second conveyor 6. Optionally, the location that the dispenser 6a, 6b dispenses the incomplete set of printed material items might be a conveying path that leads to the rejection path for rejected sets of printed material items from the head position of the second conveyor 6. Advantageously, the dispenser 6a, 6b may be able to store multiple completed sets of printed material items before dispensing them to the second conveyor 6. By storing multiple sets of printed material items, the dispenser 6a, 6b can effectively act as a buffer so that even if the printer device 4, 5 stops printing, the dispenser 6a, 6b can continue to dispense the stored sets of printed material items to the second conveyor 6, thereby preventing the first conveyor 12 and/or the second conveyor 6 from having to stop. Similarly, if there is a line stop, causing one or both of the first conveyor 12 and the second conveyor 6 to stop temporarily, the dispenser 6a, 6b can store any output sets of printed material items until it has no more storage space. This buffer means that new jobs can continue to be accepted even when the first conveyor 12 and/or the second conveyor 6 are not in operation until the dispenser 6a, 6b runs out of storage space. Additionally, the dispenser 6a, 6b may be able to selectively choose which of the stored sets of printed material items to dispense to the second conveyor 6, making it able to reorder the sequence of sets of printed material items that are dispensed to the second conveyor 6. Therefore, the dispenser 6a, 6b can account for a reordering of print jobs and even of changing the positions of entries in the working list associated with a container or a set of printed material items.

At S410, the rejected set of printed material items 19 is removed from the head position 14 of the second conveyor 6, and so there is no longer a set of printed material items 19 at the head position 14 of the second conveyor 6. Therefore, the ACS 1 goes back to S401 to wait for the next set of printed material items 19 to arrive at the head position 14 of the second conveyor 6.

If the set of printed material items is complete (valid), then the ACS 1 proceeds to S411. At S411, the ACS 1 checks if the position of the box ID associated with the scanned container and the position of the set ID associated with the scanned set of printed material items are both 0. If this condition is met, the ACS 1 proceeds to S412 and causes the loading device to dispense the set of printed material items 19 from the head position 14 of the second conveyor 6 into the container 16 located at the dispensing position 13 of the first conveyor 12.

At S413, the ACS 1 waits for confirmation from the loading device that the set of printed material items has been dispensed. Once the ACS 1 receives confirmation that the set has been dispensed at S414, the first conveyor 12 conveys the container 16 beyond the dispensing position 13. This is either done by an operator manually operating the first conveyor 12, or by the ACS 1 instructing the line control 3d to convey the container past the dispensing position.

At S415, after the container has left the dispensing position 13 of the first conveyor 12, there is no container 16 at the dispensing position 13 to be scanned, and so no scanning result is received by the ACS 1 from the container scanner 11. The software variable box_scanned is set to "false".

Similarly, at S416, because the set of printed material items 19 that was at the head position 14 has been loaded into the container 16, there is no set of printed material items at the head position 14 of the second conveyor 6, and so no scanning result is received by the ACS 1 from the printed material scanner 9. The software variable set_scanned is set to "false". After this, the ACS 1 progresses to S417.

At S417, the ACS 1 removes the entries at position 0 of the working list from the working list. That is, the box ID associated with a container at position 0 and the set ID associated with a set of printed material items at position 0 are both removed from the working list, and the position of the remaining entries all decrease by 1. After this, the ACS 1 waits for the next container 16 to be scanned at the dispensing position 13 of the first conveyor 12 and proceeds from S401 again.

Figure 5 illustrates how the box ID and set ID at position 0 of the working list are removed. As seen in the first cycle, there is a working list of three box IDs and three set IDs. Each position in the working list has a single box ID and a single set ID. After a set of printed material items has been removed from the head position 14 of the second conveyor 6, either because it is dispensed into a container 16, or because it is rejected, the associated set ID and box ID are removed from the working list. Similarly, after a container 16 is removed from the dispensing position 13 of the first conveyor 12, either because it is conveyed past the dispensing position 13 or because it is rejected, the associated set ID and box ID are removed from the working list. The removal of the set of printed materials or container (which is performed in one of steps S412, S419 or S423 in figure 4) happens before the set ID and the box ID are removed together (in one of steps S417, S421, S425 or S427) when the cycle ends (i.e. just before the ACS returns to step 401).

Figure 5 illustrates the case that the cycle of steps from S401 to S417 is performed, and shows how in step S417 the set ID and box ID at the position 0 in the working list are removed together when the cycle ends. That is, when the set of printed material items is dispensed into the container at the dispensing position from the head position, and the container is conveyed past the dispensing position, the working list entries at position 0 are both removed, ending the first cycle and starting the second cycle. Once the entries of the box ID and set ID at position 0 are removed, the remaining entries all move forward (up) one position. For example, box ID XXXB which was at position 1 moves to position 0, while set ID YYY3 which was at position 2 moves to position 1. Once the next set of printed material items associated with set ID YYY2 is loaded into the container associated with box ID XXXB at the end of the second cycle and the container has left the dispensing position 13 of the first conveyor 12, the entries at position 0 are removed from the working list to start the third cycle. As shown, to go from the second cycle to the third cycle, the entries XXXB and YYY2 at position 0 of the working list are removed, while the entries XXXC and YYY3 which were previously at position 1 of the working list move to position 0 of the working list.

When the condition of S411 is not true, the ACS 1 proceeds to S418. At S418, the ACS checks if the position of the box ID associated with the scanned container is greater than 0 and if the position of the set ID associated with the set of printed material items scanned is equal to 0. In other words, the ACS 1 checks if the container 16 that has arrived at the dispensing position 13 of the first conveyor 12 and been scanned is not at position 0 of the working list, while the set of printed material items at the head position of the second conveyor 6 is at position 0 of the working list. An example of this condition is shown in the working list of the current cycle of figure 6 by the emboldened entries, XXXB at position 1, and YYY1 at position 0. If this condition is met, it means that while the container has reached the dispensing position of the first conveyor 12, the corresponding set of printed material items that should be dispensed into the container has not yet reached the head position of the second conveyor 6. As a result, the ACS 1 proceeds to S419 and rejects the set of printed material items. The rejection of the set of printed material items 19 is as described above and can be done either manually by an operator upon notification by the ACS 1, or automatically (i.e. substantially without human involvement) by a dispenser control 6c if present by sending a notification of the rejection to the dispenser control 6c which instructs the second conveyor 6 to send the set of printed material items along the rejection path. After the set of printed material items 19 has been removed from the head position 14 of the second conveyor 6, at S420 the ACS 1 no longer receives a scanning result from the printed material item scanner 9 and so set_scanned is set to "false", and the ACS 1 progresses to S421. At S421, the ACS 1 removes the entries of the box ID and set ID at position 0 of the working list, decreasing the positions of all other entries by 1. This is illustrated in the working list of the next cycle of figure 6 in which the entries XXXA and YYY1 are removed, while the positions of all other entries decrease by 1, so that XXXB which is associated with the container currently at the dispensing position 13 of the first conveyor 12 is now at position 0 and so is the corresponding set of printed material items YYY2 which has not yet reached the head position 14 of the second conveyor 6. After this, the ACS 1 goes back to S401 and waits for the next set of printed material items 19, in this case YYY2, to reach the head position 14 of the second conveyor 6.

If the condition of S418 is not met, then the ACS 1 proceeds to S422 and checks if the position of the set ID associated with the scanned set of printed material items is greater than 0 and if the position of the box ID associated with the scanned container is equal to 0. In other words, the ACS 1 checks if the set of printed material items that has arrived at the head position of the second conveyor 6 and been scanned is not at position 0 of the working list, while the container 16 at the dispensing position 13 of the first conveyor 12 is at position 0 of the working list. An example of this condition is shown in the working list of the current cycle of figure 7 by the emboldened entries, XXXA at position 0, and YYY2 at position 1. If this condition is met, it means that while the set of printed material items has reached the head position 14 of the second conveyor 6, the corresponding container has not yet reached the dispensing position 13 of the first conveyor 12. As a result, the ACS 1 proceeds to S423 and rejects the container 16 at the dispensing position 13. The rejection of the container 16 is as described above and can be done either manually by an operator upon notification by the ACS 1, or automatically by a line control unit ("line control") 20 if present by sending notification of the rejection to the line control 20 which instructs the first conveyor 12 to send the container along the rejection path. After the container 16 has been removed from the dispensing position 13 of the first conveyor 6, at S424 the ACS 1 no longer receives a scanning result from the container scanner 11 and so box_scanned is set to "false", and the ACS 1 progresses to S425. At S425, the ACS 1 removes the entries of the box ID and set ID at position 0 of the working list, decreasing the positions of all other entries by 1. This is illustrated in the working list of the next cycle of figure 7 in which the entries XXXA and YYY1 are removed, while the positions of all other entries decrease by 1, so that YYY2 which is associated with the set of printed material items currently at the head position of the second conveyor 6 is now at position 0 and so is the corresponding container XXXB which had not yet reached the dispensing position of the first conveyor 12. After this the ACS 1 goes back to S401 and waits for the next container, in this case XXXB, to reach the dispensing position of the first conveyor 12.

If the condition at S422 is not met, then the ACS 1 proceeds to S426 in which the position of the box ID associated with the container 16 that is scanned at the dispensing position 13 of the first conveyor 12, and the set ID associated with the set of printed material items 19 scanned at the head position 14 of the second conveyor 6, are both greater than 0. This condition must be true if none of the previous conditions of S411, S418 and S422 are true. The ACS 1 proceeds to S427 and removes from the working list the entries of the box ID and the set ID that are at position 0 of the working list. The position of the remaining entries are then all decreased by 1. After this ACS 1 goes back to S401 and uses the received scanning results for the container that is still at the dispensing position of the first conveyor 12 and the set of material items that is still at the head position of the second conveyor 6 to go through the flow diagram of figure 4(a) again.

While the above processes have been largely automated, the printing system of figure 1 may further include a monitor or user interface 1c to display the status of the printer devices 4, 5 at a single location and allow for an operator to control said printer devices 4, 5 centrally from this location. The user interface 1c can enable the operator to select a printer device 4, 5 to receive an input print job, or select a printer device 4, 5 to not be assigned any future print jobs. The operator can also use the user interface 1c to pause printing output of a selected printer device 4, 5. Additionally, the ACS 1 can also monitor the status of the first conveyor 12 and the second conveyor 6 and display the status to the operator centrally. The operator can then operate the user interface 1c to stop either one or both of the first conveyor 12 and the second conveyor 6. In this way, an operator is able to centrally control all aspects of the printing system while receiving up to date statuses on each of the components in the system. While the HMI 1c acts as a central user interface through which various components of the printing system can be controlled, each of the separate components, such as the printer devices 4, 5 and conveyors 6, 12 can also have an individual HMI/operator panel through which they can be controlled. Even when each device in the printing system has an individual HMI, the central user interface 1c advantageously highlights which component in the system is at fault from a single location and can direct an operator to the individual corresponding HMI if necessary.

The ACS 1 can also stop the printing output of a printer device 4, 5 without input of an operator if an error is detected in a printer device 4, 5. When there are multiple printer devices 4, 5, further print jobs can be assigned to a printer device 4, 5 which is still operational to avoid loss of production. A notification may also be sent to an operator if an error is detected in one of the printer devices 4, 5 and printing output from said printer device 4, 5 is halted. The ACS 1 may even pre-emptively switch incoming print jobs to an alternate printer device 4, 5 if the printer device 4, 5 has reached a predetermined threshold for load balancing. The thresholds are configurable by an operator in advance of receiving print jobs, or during printing output. Using the load balancing threshold, ACS 1 will attempt to keep all printer devices 4, 5 output of printed material items within a certain range so that no one printer device 4, 5 does more work than another. If a printer device 4, 5 is removed from the pool of available printer devices 4, 5 for a period of time then the output of printed material items from that printer device 4, 5 may reduce. To address this, upon the printer device 4, 5 becoming available again, the ACS 1 may prioritise that printer device 4, 5 to output print jobs so that the output of printed material items returns to within the desired range. If an error is detected on a conveyor 6, 12, the conveyor 6, 12 can be stopped without input of an operator. A notification can then be sent to the operator when an error is detected. In either case, by automatically stopping the respective printer device 4, 5 or conveyor 6, 12 as soon as an error is detected, the likelihood of the fault causing the error getting worse is reduced, and there is less risk of the error being overlooked.

The ACS 1 may also monitor the dispensers 6a, 6b and automatically stop the corresponding printer device 4, 5 from outputting printed material items when an error is detected. In such a case, any print jobs that are queued may be sent to a printer device 4, 5 with a still functioning dispenser 6a, 6b. The ACS 1 may notify an operator when such an error is detected in a dispenser 6a, 6b. Alternatively, when an error is detected in a dispenser 6a, 6b the corresponding printer device 4, 5 may not be automatically controlled and instead a notification may be sent to an operator for them to decide how to respond to the error.

If, as a result of an error or slow printing, the printing queue has reached the limit of print jobs, no further print jobs will be accepted until a job has been completed from the printing queue, freeing up space for a new print job to join the queue. Any boxes issued during a period in which print jobs are not being accepted may be rejected at the dispensing position 13 or at the reading position 18.

## Claims

1. A printing system comprising:
one or more printer devices (4, 5) to print printed material items,
a first conveyor (12) to convey to a dispensing position a container for holding printed material items;
a second conveyor (6) to convey one or more printed material items that constitute a set of printed material items, from the one or more printer devices (4, 5) to a head position;
a loading device configured to load the set of printed material items at the head position into the container when the container is at the dispensing position;
a printed material item scanner (9) to read a printed material identifier mark on a printed material item of the set of printed material items, when the set of printed material items is located at the head position, and generate a first output based on the printed material identifier mark;
a container scanner (11) to read a container identifier mark on the container when the container is at the dispensing position, and generate a second output based on the container identifier mark;
one or more processors (2); and
one or more memory storage units (1a), storing instructions which, when processed by the one or more processors (2), cause the one or more processors (2), based on the first and second outputs, selectively to:
(i) control the loading device to load the set of printed material items at the head position into the container at the dispensing position;
(ii) control the loading device to convey the set of printed material items at the head position along a printed material items rejection path; or
(iii) control the first conveyor (12) to convey the container at the dispensing position along a container rejection path.

2. A printing system according to claim 1, comprising:
a second container scanner (10) to read a container identifier mark on the container to produce a recognition result, when the container is at a reading position, the first conveyor (12) being arranged to convey the container from the reading position to the dispensing position;
the one or more memory storage units (1a), further storing instructions which, when processed by the one or more processors (2), cause the one or more processors (2) to:
determine a print job based on the recognition result, the print job comprising producing the one or more printed material items that constitute the set of printed material items; and
instruct one of the one or more printer devices (4, 5) to print the determined print job.

3. A printing system comprising:
one or more printer devices (4, 5) to print printed material items;
a first conveyor (12) to convey to a dispensing position a container for holding printed material items;
a first container scanner (10) to read a container identifier mark on the container to produce a recognition result;
one or more processors (2); and
one or more memory storage units (1a), storing instructions which, when processed by the one or more processors (2), cause the one or more processors (2) to:
determine a print job based on the recognition result, the print job comprising producing one or more printed material items that constitute a set of printed material items; and
instruct one of the one or more printer devices (4, 5) to print the determined print job.

4. The printing system according to any preceding claim, wherein:
the one or more memory storage units (1a) store further instructions which, when processed by the one or more processors (2), cause the one or more processors (2) to:
obtain status information from each of the one or more printer devices (4, 5); and
control the one or more printer devices (4, 5) based on the status information.

5. The printing system of claim 4, wherein said controlling the one or more printer devices (4, 5) based on the status information comprises:
based on the status information, determining a list of available printer devices (4, 5);
selecting a printer device (4, 5) from the list of available printer devices (4, 5); and
controlling the selected printer device (4, 5) to produce the set of printed material items.

6. A printing system comprising:
one or more printer devices (4, 5) to print printed material items;
a first conveyor (12) to convey to a dispensing position a container for holding printed material items;
a second conveyor (6) to convey one or more printed material items that constitute a set of printed material items, from the one or more printer devices (4, 5) to a head position;
a loading device configured to load the set of printed material items at the head position into the container when the container is at the dispensing position;
one or more processors (2); and
one or more memory storage units (1a), storing instructions which, when processed by the one or more processors (2), cause the one or more processors (2) to:
obtain status information from each of the one or more printer devices (4, 5);
based on the status information, determine a list of available printer devices (4, 5);
select a printer device (4, 5) from the list of available printer devices (4, 5); and
control the selected printer device (4, 5) to produce the set of printed material items.

7. The printing system according to claim 5 or claim 6, further comprising at least one of:
a monitor (1c) to display the status information of the one or more printer devices (4, 5) to a user; and
a user interface (1c) using which a user can select at least one of the one or more printer devices (4, 5), thereby preventing the one or more processors (2) from controlling the selected at least one printer device (4, 5) to produce sets of printed material items.

8. The printing system according to any preceding claim, wherein at least one of the printer devices (4, 5) comprises:
a corresponding completion scanner (7, 8) to read printed material identifier marks on printed material items produced by the corresponding printer device (4, 5) to produce a completion result indicating whether a set of printed material items produced by the corresponding printer device (4, 5) is complete;
wherein the one or more memory storage units (1a) store further instructions which, when processed by the one or more processors (2), cause the one or more processors (2) selectively to either:
transfer the printed material items to a printed items discard path; or
control the second conveyor (6) to convey the printed material items to the head position.

9. The printing system according to claim 8, wherein the printed items discard path and the printed material items rejection path lead to a shared printed material items receptacle.

10. The printing system according to claim 8 or claim 9, wherein the at least one of the printer devices (4, 5) further comprises:
a dispenser (6a, 6b) configured to transfer printed material items produced by the printer device (4, 5) to the second conveyor (6) and, in the case of a set of printed material items which comprises a plurality of printed material items, group the set of printed material items, upon the corresponding completion scanner (7, 8) generating a completion result indicating that the set of printed material items is complete.

11. The printing system according to claim 10, wherein the dispenser (6a, 6b) is further configured to store multiple sets of printed material items.

12. The printing system according to claim 11, wherein the dispenser (6a, 6b) is further configured to select one of the multiple sets of printed material items, and transfer the selected set of printed material items to the second conveyor (6);
and optionally wherein the dispenser (6a, 6b) maintains a log of the completion result for each of the multiple sets of printed material items, and said selection of one of the multiple sets of printed material items is based on the log.

13. The printing system according to any preceding claim, wherein the one or more memory storage units (1a) store further instructions which, when processed by the one or more processors (2), cause:
the one or more processors (2) to detect the status of the first conveyor (12) and pause printing if an error is detected.

14. The printing system according to claim 1 or claim 6 or any preceding claim when dependent on claim 1 or claim 6, wherein the one or more memory storage units (1a) store further instructions which, when processed by the one or more processors (2), cause:
the one or more processors (2) to detect the status of the second conveyor (6) and pause printing if an error is detected.

15. The printing system according to claim 13 or claim 14, further comprising at least one of:
a monitor (1c) to display to a user the detected status of the conveyor; and/or
a user interface (1c) using which a user can stop the conveyor of which the status was detected.
